(19) Europäisches Patentamt
European Patent Office
Office européen des brevets

(11) **EP 4 527 952 A1**

(12) **EUROPEAN PATENT APPLICATION**
published in accordance with Art. 153(4) EPC

(43) Date of publication:
**26.03.2025 Bulletin 2025/13**

(21) Application number: 23835317.1

(22) Date of filing: **22.06.2023**

(51) International Patent Classification (IPC):
*C21D 9/46* (2006.01)  *C21D 9/56* (2006.01)
*C21D 11/00* (2006.01)  *C22C 38/00* (2006.01)
*C22C 38/02* (2006.01)

(52) Cooperative Patent Classification (CPC):
**C21D 9/46; C21D 9/56; C21D 11/00; C22C 38/00; C22C 38/02**

(86) International application number:
**PCT/JP2023/023093**

(87) International publication number:
**WO 2024/009783 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.07.2022 JP 2022107647**

(71) Applicant: **JFE Steel Corporation**
**Tokyo 100-0011 (JP)**

(72) Inventor: **KOBAYASHI, Hirokazu**
**Tokyo 100-0011 (JP)**

(74) Representative: **Grünecker Patent- und Rechtsanwälte PartG mbB Leopoldstraße 4 80802 München (DE)**

(54) **HOT-ROLLED STEEL STRIP ANNEALING METHOD, AND ELECTROMAGNETIC STEEL SHEET PRODUCTION METHOD USING SAID ANNEALING METHOD**

(57) Provided is a method capable of accurately controlling the steel strip temperature on the exit side of a heating zone and thus the steel strip temperature on the exit side of a soaking furnace in hot strip annealing for a hot-rolled steel strip. A hot-rolled steel strip is annealed in an annealing line with a rapid heating device arranged, and an annealing process model which has been trained in advance by machine learning using operation parameters and past records of the steel strip temperature is used, as training data. An annealing method for the hot-rolled steel strip includes predicting, with the model, the heating temperature of the rapid heating device, or both the heating temperature of the rapid heating device and a heating condition for the heating zone or the like so as to reduce the difference between a predicted value and a target value of the annealing temperature for the hot-rolled steel strip. In addition, an electrical-steel-sheet production model, which has been trained in advance through machine learning by using training data including temperature distributions of slabs or hot-rolled steel strips and the magnetic properties of electrical steel sheets, is used. A method for producing an electrical steel sheet includes the steps of predicting, with the model, the annealing temperature for a hot-rolled steel strip to reduce variations in magnetic properties, setting the predicted annealing temperature as a target value, and reducing the difference between the target value and the predicted value of the annealing temperature of the annealing process model.

[Fig. 1]

**Description**

Technical Field

The present invention relates to an annealing method for a hot-rolled steel strip that includes predicting a rapid heating temperature in an annealing step for a steel strip subjected to hot rolling (hot-rolled steel strip), or predicting both the rapid heating temperature and a heating condition for a heating or soaking zone. In addition, the present invention relates to a method for producing an electrical steel sheet using the annealing method for reducing the variations in magnetic properties of a steel strip product.

Background Art

It is known that a hot-rolled steel strip containing 1.6 to 5.0 mass% Si for an electrical steel sheet can achieve excellent magnetic properties in the product sheet, i.e. can highly develop the Goss orientation, by being subjected to annealing (hot strip annealing) before cold rolling. Such hot strip annealing is typically performed using a continuous annealing line including a heating zone, a soaking zone, and a cooling zone.

It is known that the annealing temperature during the hot strip annealing significantly affects the magnetic properties of the product sheet. Thus, it is necessary to control the temperature of the hot-rolled steel strip to be constant and uniform over the entire length and width of the steel strip. Therefore, in the continuous annealing line described above, the furnace temperature in the soaking zone is controlled to be constant to control the heating temperature for the hot-rolled steel strip to be annealed within a suitable range.

However, with the conventional annealing method described above in which only the furnace temperature in the soaking zone is controlled, it has been difficult to suppress the variation in the heating temperature for the steel strip due to the variation in the thickness of the steel strip in the longitudinal direction or the variation in the threading speed of the steel strip, and thus to control the heating temperature within a suitable range. This is because a hot-rolled steel strip, which is not subjected to cold rolling, is thick, and therefore has a high heat capacity (heat amount required to increase the temperature of an object by 1°C), requiring a larger amount of heat for heating than a cold-rolled steel strip. Further, a hot-rolled steel strip has a large variation in thickness relative to the thickness of the rolled sheet due to its large sheet thickness and especially has a large variation in thickness at the front end of the steel strip, and thus has a large variation in heat capacity within the same steel strip. Therefore, compared to a cold-rolled steel strip, a hot-rolled steel strip significantly affects the temperature of an annealing furnace. It would be therefore difficult to maintain the furnace temperature in each of the heating zone and soaking zone at a predetermined temperature, and thus to heat the hot-rolled steel strip to a predetermined soaking temperature.

However, there has been virtually no disclosure of a technology for controlling the heating temperature of hot strip annealing with high accuracy. For example, Patent Literature 1 discloses a method in which the cooling rate of hot strip annealing is controlled, so that the aging index of a steel sheet before a final cold rolling is reduced in the production of a grain-oriented electrical steel sheet.

Patent Literature 2 discloses a hot strip annealing method for a Si-containing steel sheet in which a steel strip is rapidly heated.

Citation List

Patent Literature

Patent Literature 1: JP-2016-000856A
Patent Literature 2: J-2018-066040A

Summary of Invention

Technical Problem

However, although Patent Literature 1 above discloses a technology for improving the texture of a hot-rolled sheet for a grain-oriented electrical steel sheet by performing hot strip annealing on the sheet, it does not refer to the necessity of controlling the heating temperature of the hot strip annealing with high accuracy or means therefor.

In addition, in the technology disclosed in Patent Literature 2 above, the rapid heating performed during the hot strip annealing is a means intended to improve the descaling property after the annealing, and there is no mention of controlling the heating temperature after the rapid heating with high accuracy.

As described above, in the production of an electrical steel sheet, it is crucial to control the heating temperature of hot strip annealing with high accuracy from the viewpoint of improving magnetic properties. However, since a hot-rolled steel strip is thick and has a low accuracy of the sheet thickness and a large variation in the sheet thickness, the temperature of the annealing furnace varies accordingly. Thus, there has been a limitation in achieving precise control of the heating temperature for a steel strip.

An object of the present invention is to solve the above problems of the conventional technology and provide an annealing method for a hot-rolled steel strip that can precisely control the steel strip temperature on the exit side of a heating zone and thus the steel strip temperature on the exit side of a soaking zone during hot strip annealing.

It should be noted that, in a flow of a steel strip, the upstream side of the flow around the outer side of a device is referred to as an "entry side of a device," and the downstream side of the flow around the outer side of a device is referred to as an "exit side of a device."

Solution to Problem

The inventors conducted intensive studies on an annealing method for a hot-rolled steel strip that can accurately control the steel strip temperature on the exit side of a heating zone and thus the steel strip temperature on the exit side of a soaking zone by using a rapid heating device during hot strip annealing.

Consequently, the inventors generated an annealing process model by machine learning, and predicted, with the model, the heating temperature of a rapid heating device disposed on the entry side of an annealing furnace or in the heating zone, and then actually applied the predicted heating temperature as a production condition to annealing for a hot-rolled steel strip. Accordingly, the inventors have found it possible to suppress the variation in the steel strip temperature on the exit side of the heating zone and thus the steel strip temperature on the exit side of the soaking zone, and thus control the annealing temperature to a target temperature with high accuracy.

When a heating temperature exceeding the heating ability of the rapid heating device was predicted, the inventors predicted the heating temperature of the rapid heating device taking into account heating conditions for the heating and soaking zones using the above annealing process model and actually applied the predicted heating temperature as a production condition. Accordingly, the inventors found it possible to perform annealing at a target annealing temperature. Further, the inventors generated an electrical-steel-sheet production model by machine learning to thus predict the annealing temperature for obtaining the target magnetic properties of the final steel strip product. Then, the inventors predicted the heating temperature of the rapid heating apparatus with the above annealing process model by setting the predicted annealing temperature as a target annealing temperature, and then actually applied the predicted heating temperature as a production condition to annealing. Accordingly, the inventors found it possible to perform annealing at the target annealing temperature, and thus obtain a steel strip having the target magnetic properties.

An annealing method for a hot-rolled steel strip and a method for producing an electrical steel sheet using such an annealing method according to the present invention that advantageously solves the above problems are as follows.

[1] An annealing method for a hot-rolled steel strip, including annealing a hot-rolled steel strip in an annealing line that includes a heating zone, a soaking zone, and a cooling zone in this order from an upstream side and that is provided with a rapid heating device either on an entry side of the heating zone or in the heating zone and predicting a heating temperature of the rapid heating device, or both the heating temperature of the rapid heating device and heating conditions for the heating or soaking zone by using an annealing process model prepared in advance through machine learning using operation parameters, including steel strip information, selected from each zone and using past records of steel strip temperatures in each zone, so as to reduce the difference between predicted and target values of an annealing temperature for the hot-rolled steel strip.

[2] A method for producing an electrical steel sheet, including heating a slab containing 1.6 to 5.0 mass% Si for an electrical steel sheet in a heating furnace, hot-rolling the slab to obtain a hot-rolled steel strip, annealing the hot-rolled steel strip in an annealing line that includes a heating zone, a soaking zone, and a cooling zone in this order from an upstream side and that is provided with a rapid heating device either on an entry side of the heating zone or in the heating zone and also with a thickness meter at the upstream side of the rapid heating device, pickling the annealed hot-rolled steel strip, performing a cold rolling process once or two or more cold rolling processes with an intermediate annealing process between each cold rolling process to obtain a cold-rolled steel strip, subjecting the cold-rolled steel strip to a decarburization annealing, applying an annealing separating agent to the cold-rolled steel strip followed by drying, and performing a finishing annealing, characterized in that the hot-rolled steel strip is annealed so as to reduce a difference between the target value and the predicted value of the annealing temperature predicted by the annealing process model used in the annealing method for the hot-rolled steel strip according to [1] above, wherein the target value is an annealing temperature for the hot-rolled steel strip predicted so as to reduce variations in magnetic properties predicted by, using an electrical-steel-sheet production model prepared in advance through machine learning by using, as training data, a temperature distribution of the slab after slab heating or a temperature distribution of the steel strip in rough-rolling during hot rolling, past records of annealing temperatures for hot-rolled steel strips, and magnetic properties of electrical steel sheets.

Advantageous Effects of Invention

The present invention includes predicting the heating temperature of a rapid heating device or the heating temperature of the rapid heating device as well as a heating condition for a heating zone or a soaking zone using an annealing process model, thereby achieving accurate control of the steel strip temperature on the exit side of the heating zone and thus the steel strip temperature on the exit side of the soaking zone to a predetermined target temperature. This greatly improves the magnetic properties of the final product sheet and reduces the occurrence of defects.

The present invention further includes predicting the annealing temperature for obtaining the target magnetic properties using an electrical-steel-sheet production model and determining the heating temperature of the rapid heating device with the annealing process model by setting the predicted annealing temperature as a target temperature, thereby achieving precise control of the annealing temperature to a predetermined target temperature. This can provide a steel strip with the target magnetic properties with little variation, thereby stably improving the magnetic properties of the final product sheet and suppressing the occurrence of poor magnetic properties.

Brief Description of Drawings

[Fig. 1] Fig. 1 is a schematic view of an example of a hot strip annealing line used in an embodiment of the present invention.

[Fig. 2] Fig. 2 is a schematic view of an example of a hot strip annealing line used in another embodiment of the present invention.

[Fig. 3] Fig. 3 is a flowchart of a flow of an annealing method according to an embodiment of the present invention.

[Fig. 4] Fig. 4 is a flowchart of a flow of a method for producing an electrical steel sheet according to an embodiment of the present invention.

Description of Embodiments

An annealing method for a hot-rolled steel strip and a method for producing an electrical steel sheet according to an embodiment of the present invention will be described.

First, an annealing step for a hot-rolled steel strip will be described.

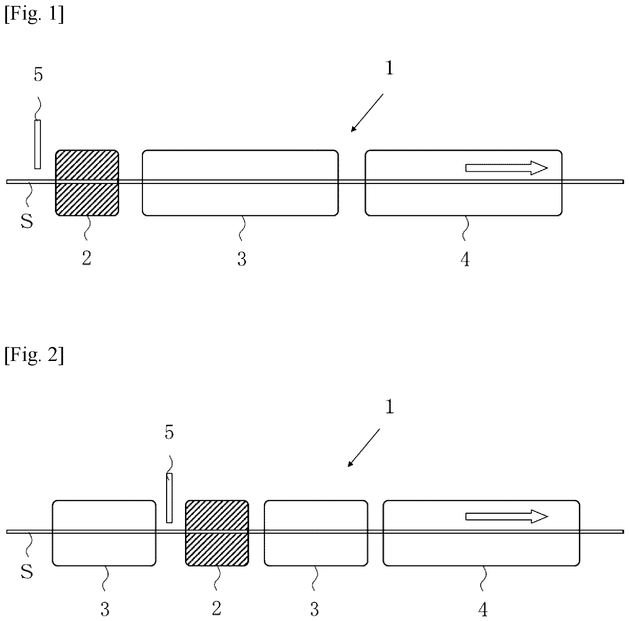

Fig. 1 is a schematic view of the first half of a continuous annealing line that is used for annealing (hot strip annealing) a hot-rolled steel strip for an electrical steel sheet and includes a heating zone, a soaking zone, and a cooling zone arranged in this order from the upstream side. Typically, hot strip annealing is performed by heating a steel strip S in a heating zone 3 so that the steel strip temperature can reach a target soaking temperature on the exit side of the heating zone, then holding the steel strip S at the soaking temperature in a soaking zone 4 for a predetermined period, and further cooling the steel strip S in the cooling zone (not shown). At this time, the furnace temperature in each of the heating zone 3 and the soaking zone 4, and the threading speed of the steel strip S are maintained in a constant condition from the viewpoint of holding the steel strip at a predetermined soaking temperature for a predetermined period.

However, the steel strip unavoidably has a variation in thickness, especially a large variation in thickness at the front and rear end portions of the steel strip. Further, there may be a case where the threading speed of the steel strip is suddenly changed while the steel strip is being annealed. As described above, when the steel strip has a large variation in thickness or when the threading speed of the steel strip is suddenly changed, it is difficult to heat the steel strip to a target temperature simply by controlling the furnace temperature in each of the heating zone and soaking zone to be constant, so that it is necessary to change the preset temperature of the furnace. However, suddenly changing the preset temperature of the furnace would cause an overshoot or hunting not only of the furnace temperature but also of the steel strip temperature. Further, the furnace temperature cannot be changed immediately because it takes some time to change the furnace temperature. Therefore, it is desirable to set the temperature of an annealing furnace 1 as constant as possible or to change the temperature gradually. As such, it would be insufficient to change the steel strip temperature only by controlling the furnace temperature in response to a sudden change, such as a variation in the thickness or sudden changes in the threading speed of the steel strip. However, by further setting the temperature on the exit side of the rapid heating device to a target annealing temperature, stable operation can be achieved without causing overshoot or hunting of both the furnace temperature and the steel strip temperature.

Since a hot-rolled steel strip is thicker and thus has a higher heat capacity than a cold-rolled steel strip as described above, it would be difficult not only to heat the steel strip so as to follow changes in the furnace temperature in the heating zone but also to heat the steel strip to a target temperature because it affects the furnace temperature in the heating zone 3. Therefore, in the heating zone 3, it is desired to heat the steel strip so as to achieve a predetermined target temperature on the exit side of the heating zone irrespective of the variation in the thickness or threading speed of the steel strip.

The final purpose of the hot strip annealing is to perform a heat treatment in which the steel strip S is held at a target soaking temperature in the soaking zone 4 for a predetermined period. A hot-rolled steel strip, which is thicker than a cold-rolled steel strip, has a different amount of heat depending on the temperature variation of the steel strip on the exit side of the heating zone. This causes the amount of heat transferred to the soaking zone 4 to vary and thus the furnace temperature to vary, making it difficult to heat the hot-rolled steel strip to the target soaking temperature. Also in this sense, it is preferable to set the steel strip temperature on the exit side of the rapid heating device 2 so that the steel strip temperature on the exit side of the heating zone 3 is constant.

The rapid heating device 2 is arranged upstream of the soaking zone in order to control with high accuracy the steel strip temperature on the exit side of the heating zone and thus the steel strip temperature on the exit side of the soaking zone. The rapid heating device 2 may be arranged upstream of the heating zone, as shown in Fig. 1, or in the heating zone 3 (including between divided sections of the heating zone 3), as shown in Fig. 2. However, when an induction heating device, particularly a solenoid-actuated apparatus is used as the rapid heating device 2, it is difficult to heat the steel strip to a temperature higher than the Curie point. Thus, in such a case, when the heating zone is divided into three sections including the entry side zone, the middle zone, and the delivery side zone, the rapid heating device 2 is preferably arranged not on the delivery side zone, but on the entry side zone or the middle zone.

It should be noted that, in a flow of a steel strip, successive positions of the steel strip within the heating zone from the upstream side are referred to as the "entry side zone," the "middle zone," and the "delivery side zone."

Herein, the rapid heating device 2 may be any device that can increase or change the steel strip temperature with high responsiveness. In addition, as the method for heating the steel strip, any method having a good track record, such as induction heating (solenoid method and transverse method), electrical heating, or near-infrared heating, can be suitably used.

The heating ability required is preferable to be greater to accommodate large a variation in the threading speed or the thickness of the steel strip. For example, when the temperature of a steel strip having a thickness of about 2 mm varies by about ±20°C on the entry side of the soaking zone due to a minute variation in the thickness, the temperature can be uniform sufficiently by using the rapid heating device 2 having a heating ability of about 50 to 100°C. However, the required heating ability would be different depending on the temperature range in which the rapid heating device is arranged and the relationship between the specific heat and the temperature of the steel strip.

<Annealing method for hot-rolled steel strip>

The annealing method for a hot-rolled steel strip according to an embodiment of the present invention will be described.

One embodiment of the method of the present invention involves, when annealing a hot-rolled steel strip, providing a rapid heating device such as an induction heating device on the entry side of an annealing furnace or in a heating zone, predicting the heating temperature of the rapid heating device with an annealing process model so as to achieve a target annealing temperature for the hot-rolled steel strip, and performing annealing with the predicted value of the heating temperature as a production condition, so that the variation in the steel strip temperature on the exit side of the heating zone can be suppressed, and the annealing temperature can be controlled to the target value with high accuracy.

That is, the annealing method that includes the prediction based on the annealing process model allows the steel strip temperature on the exit side of the heating zone 3 to be kept constant, suppressing the variation in the furnace temperature in the soaking zone 4 due to the variation in the amount of heat transferred from the steel strip to the soaking zone 4.

As described above, a certain effect on the variation in the steel strip temperature can be achieved simply by controlling the temperature of the annealing furnace with the annealing process model. However, it would be difficult to achieve a completely uniform temperature of a thick steel strip that has a minute thickness variation of about a few tens $\mu$m, such as a steel strip after hot rolling (before cold rolling), simply by controlling the furnace temperature. Therefore, it is desirable to keep the furnace temperature as constant as possible or to change it stably and slowly. By setting the heating temperature of the rapid heating device as a target variable, the annealing temperature can be made uniform and accurately controlled.

The method for predicting the heating temperature of the rapid heating device with the annealing process model will be described.

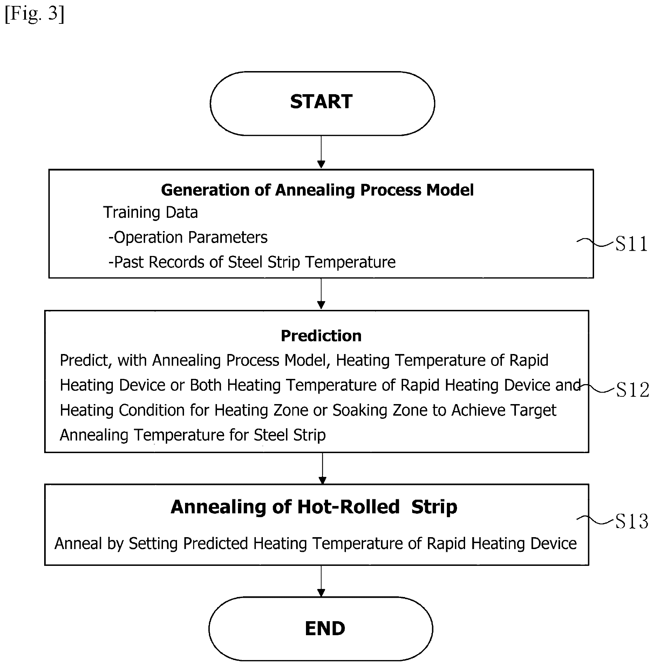

Fig. 3 illustrates a flow of the annealing method for a hot-rolled steel strip, which includes the generation of the annealing process model and prediction, according to an embodiment of the present invention. The annealing method for a hot-rolled steel strip includes a step of generating an annealing process model (step S11), a prediction step (step S12), and an annealing step of the hot-rolled steel strip (step S13), which are performed in this order.

Regarding the annealing process model, in the annealing step including heating with the rapid heating device 2 shown in Fig. 1, an annealing process model for a hot-rolled steel strip is trained in advance through machine learning by using, as training data, operation parameters selected from each line including the steel strip information, and past records of the steel strip temperature in each line (step S11).

The operation parameter which forms the training data for the annealing process model is preferably one or more parameters selected from the group consisting of the amount of gas fed to a burner of the annealing furnace in the annealing line, the furnace temperature of the heating zone 3, the furnace temperature of the soaking zone 4, the steel strip temperature, the steel strip thickness, and the threading speed of the steel strip.

A burner is typically used in a direct fired heating furnace or a radiant tube furnace, etc. However, a change in the combustion amount does not have an immediate effect on the furnace temperature, causing a time lag before a change in the furnace temperature occurs. In response, when the amount of gas supplied, from which the variation in the heating ability within the furnace can be directly grasped, is used as an input variable for the generation of the model and as an explanatory variable for the prediction, the temperature can be predicted with high accuracy. Meanwhile, when an electric furnace is used, it is preferable to include the amount of power supplied as an input variable and an explanatory variable for the prediction in the generation of the annealing process model. Furthermore, to predict the heating temperature of the rapid heating device, it is preferable to include the furnace temperature in each section, the steel strip temperature, the steel strip thickness, and the threading speed, which also have a great influence on the heating temperature, as input variables for the generation of the model and as explanatory variables for the prediction.

To generate such an annealing process model (step S11), a neural network can be used as a machine learning method, for example.

In the prediction (step S12), the heating temperature of the rapid heating device 2 is predicted with the annealing process model for the hot-rolled steel strip trained in advance by machine learning (step S11) to approach the target annealing temperature. That is, the heating temperature of the rapid heating device 2 is predicted with the annealing process model so as to reduce the difference between the predicted value of the annealing temperature for the hot-rolled steel strip and the target value of the annealing temperature, and then, annealing is performed by setting the predicted temperature as a production condition (step S13).

There is a case where the heating temperature of the rapid heating device 2 predicted by the annealing process model exceeds the heating ability of the rapid heating device and therefore cannot be set as a production condition. In such a case, the heating temperature of the rapid heating device is predicted within the range of its heating ability not only by the rapid heating device but also by a heating condition for the heating zone or the soaking zone together (step S12).

<Method for producing electrical steel sheet>

By using information on the steps before and after hot rolling, the annealing temperature after hot rolling can be set close to a target temperature with high accuracy and the magnetic properties of the final steel sheet product can also be improved.

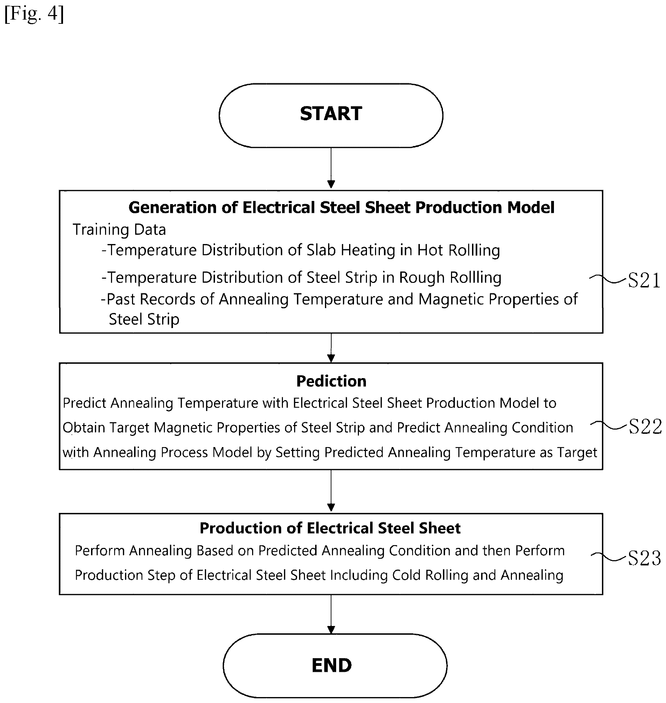

Fig. 4 illustrates a flow of the production of an electrical steel sheet according to an embodiment of the present invention, which involves producing an electrical-steel-sheet production model and using the annealing method for a hot-rolled steel strip based on the prediction of the annealing temperature. The production of an electrical steel sheet includes a step of generating an electrical-steel-sheet production model (step S21), a prediction step (step S22), and a step of performing annealing based on the predicted annealing condition, performing cold rolling, and then performing annealing (step S23).

In the annealing step including heating by the rapid heating device 2 shown in Fig. 1, an electrical-steel-sheet production model is generated by machine learning by using result data stored in each line as training data (step S21).

The result data that form the training data for the electrical-steel-sheet production model preferably include the heating temperature distribution of a slab heated before hot rolling, the temperature distribution of a steel strip in a rough-rolling step during hot rolling, and the magnetic properties of the steel strip subjected to final finishing annealing after cold rolling.

During slab heating before hot rolling, the dissolution of precipitates called inhibitors is controlled such that the orientations of crystal grains can be highly integrated into the Goss orientation by secondary recrystallization in a subsequent annealing step for the steel strip. When the slab is removed from the slab heating furnace, the temperature distribution of the slab itself varies depending on the position of a rod-like base called skid, which is arranged to hold the slab in the slab heating furnace, or depending on the time the slab has been in the slab heating furnace. In addition, the temperature history of the slab differs between a skid portion, which is the portion of the slab in contact with the skid and a non-skid portion, which is the portion of the slab not in contact with the skid. As a result, the states of the precipitates in the slab would vary, resulting in variations in the magnetic properties of the final product.

**EP 4 527 952 A1**

Thus, training data used for the electrical-steel-sheet production model includes the temperature distribution of the slab or temperature distribution of the steel strip in a rough-rolling step during hot rolling, to suppress the variations in the magnetic properties of the final product, considering the variations in the states of precipitates and in the recrystallization temperature due to the variation in the slab temperature during the heating of the slab.

To generate such an electrical-steel-sheet production model (step S21), a neural network can be used as a machine learning method, for example.

The prediction (step S22) is to predict a target annealing temperature by the generated electrical-steel-sheet production model (step S21) and then predict the heating temperature of the rapid heating device 2 by the annealing process model so as to achieve the predicted target annealing temperature. Specifically, the annealing temperature for reducing the variations in magnetic properties is predicted by using the generated electrical-steel-sheet production model (step S21). Then, annealing is performed (step 23) by setting an annealing condition such that the annealing temperature predicted by the annealing process model approaches the predicted annealing temperature as a target value, that is, such that the difference between the target value of the annealing temperature predicted by the electrical-steel-sheet production model and the value predicted by the annealing process model is reduced. In such an annealing condition, it is preferable to determine, for example, the heating temperature of the rapid heating device 2 and then anneal a hot-rolled steel strip under production conditions including the heating temperature.

To avoid erroneous prediction by each of the annealing process model and the electrical-steel-sheet production model due to abnormal values of the result data, it is also possible to use such a model in combination with a physical model, and determine if there is any abnormality in the measured data.

Determining the overall heat absorption rate $\phi_{CG}$ in the furnace can calculate the amount of temperature increase $\Delta T$ of the steel strip in the furnace with the following Expression (1) of the physical model.

[Expression 1]

$$\Delta T = \frac{\sigma \varphi_{CG} L}{C_p \rho V t} \times \frac{1000}{60} \times \left[ \left( \frac{T_f + 273}{100} \right)^4 - \left( \frac{T_s + 273}{100} \right)^4 \right] \qquad \cdots (1)$$

where $\Delta T$ is the amount of temperature increase [°C],

$\sigma$ is the Stefan-Boltzmann constant ($4.88 \times 10^{-8}$ [kcal/m$^2$·h·K$^4$]),
$\phi_{CG}$ is the overall heat absorption rate,
L is the heated length [m],
$C_p$ is the specific heat [kcal/kg°C],
$\rho$ is the density 7850 [kg/m$^3$],
V is the speed of the line [m/min],
t is the thickness [mm] of the sheet,
$T_f$ is the furnace temperature [°C], and
$T_s$ is the steel sheet temperature [°C] on the entry side.

By using Expression (1) above, the steel sheet temperature $T_s$ on the entry side, that is, the heating temperature for the steel sheet by the rapid heating device can be adjusted by taking into account the variation in the furnace temperature $T_f$, so that it is possible to adjust the amount of temperature increase $\Delta T$ and thus control the steel strip temperature on the entry side of the soaking zone. It should be noted that the overall heat absorption rate $\phi_{CG}$ is the index representing efficiency related to the flow of heat throughout the entire furnace, and is determined by the past record of the furnace temperature and the sheet temperature.

The amount of heat required to heat the steel strip as well as the amount of heat retained by the steel strip varies with the width of the steel strip. Therefore, the amount of heat removed from the furnace body, that is, the temperature of the furnace body also varies accordingly. Therefore, when using a heating furnace with a low heat capacity, that is, when using a heating furnace with a variable furnace temperature, it is preferable to include the width of the steel strip in the training data when generating the annealing process model and the training data for generating the electrical-steel-sheet production model.

Note that the target hot-rolled steel strip for an electrical steel sheet of the present invention preferably contains 1.6 to 5.0 mass% Si. Si is an element effective in increasing the resistivity of steel and thus reducing iron loss. Thus, the Si content is preferably 1.6 mass% or more. However, when the Si content is more than 5.0 mass%, not only does the magnetic flux density decrease but also the steel becomes brittle and cracks occur during cold rolling, resulting in a significant decrease in productivity. Preferably, the Si content is in the range of 2.0 to 4.0 mass%.

Note that the hot-rolled steel strip may also contain, in addition to Si, a known inhibitor-forming ingredient to develop secondary recrystallization, or a known additional element to improve the magnetic properties or mechanical properties.

According to the above embodiment of the present application, using the annealing process model can accurately control the steel strip temperature on the exit side of the heating zone and thus the steel strip temperature on the exit side of the soaking zone to a predetermined target temperature. This can reduce secondary recrystallization defects as well as defective crystal orientations, thus providing the steel strip with excellent magnetic properties. Further, according to another embodiment of the present application, further utilizing the electrical-steel-sheet production model can provide a steel strip with the target magnetic properties with little variation and stably improve the magnetic properties of the final product sheet, thus suppressing the occurrence of poor magnetic properties.

Example

[Example 1]

Hot-rolled steel strips each having a thickness of 1.4 to 2.8 mm and a width of 1200 mm were subjected to hot strip annealing with a target soaking temperature of 1050°C under the conditions described in Table 1, using the annealing line 1 including the rapid heating device 2, the heating zone 3, and the soaking zone 4 shown in Fig. 1. At that time, data on the steel strip temperature in the longitudinal direction on the exit side of the soaking zone were collected for each hot-rolled coil, and the maximum value of the difference between the steel strip temperature and a target temperature was evaluated. The heating accuracy in each of the above annealing conditions was evaluated by dividing each hot-rolled steel strip into 20 sections in the longitudinal direction, and determining the difference between the average steel strip temperature of each split section and the target soaking temperature (1050°C), and then identifying the maximum value among them. Note that a solenoid-type induction heating device was used as the rapid heating device 2.

In the example of the present invention, an annealing process model was used that had been obtained by machine learning with a neural network using pieces of data on the operation of the annealing furnace collected at intervals of 10 seconds for one month, that is, about 200 thousand pieces of data. The model was used to predict the heating temperature of the rapid heating device so that the difference between the target annealing temperature (1050°C) and the predicted value of the annealing temperature is 8°C or less. Then, annealing was performed by using the predicted heating temperature as the production condition. In each of Test Nos. 1 to 6 in Table 1, the heating temperature for the steel strip on the exit side of the rapid heating device represents a predicted value derived from the annealing process model. The furnace temperature of the annealing furnace was adjusted to 800 to 1100°C. Note that the weight of each hot-rolled steel strip (coil) used in the example was about 20 tons, and the difference between the preset sheet thickness (preset rolled sheet thickness) and the actually measured thickness of the hot-rolled steel strip was 200 $\mu$m at maximum in the front and rear end portions of the hot-rolled steel strip, and about 50 $\mu$m at maximum in the middle portion thereof.

For comparison purposes, each of Test Nos. 14 to 25 in Table 1 shows an example in which the temperature on the exit side of the rapid heating device was determined in proportion to LSD (the preset thickness × the threading speed) without using the prediction based on the annealing process model. The LSD values ( the preset thickness × the threading speed) in Table 1 were calculated with reference to the preset thickness. However, since each steel strip actually has a thickness variation of several tens $\mu$m in the longitudinal direction, LSDt (the actually measured thickness of the steel strip × the threading speed) is indicated for distinction purposes. The speed of the line for each hot-rolled coil was changed at points of 1/3 and 2/3 of the coil in the longitudinal direction. In Table 1, the speed of the line and the LSD at the position of the first 1/3 of each hot-rolled steel strip in the longitudinal direction are respectively indicated by Line Speed 1 and LSD1, those at the position of the second 1/3 of each hot-rolled steel strip in the longitudinal direction are respectively indicated by Line Speed 2 and LSD2, and those at the position of the third 1/3 of each hot-rolled steel strip in the longitudinal direction are respectively indicated by Line Speed 3 and LSD3.

The rapid heating temperature was changed in accordance with the variation in LSDt to be proportional to LSDt. The amount of change in the heating temperature by the rapid heating device for each steel strip was a value obtained by multiplying the difference between the two values (LSDt - LSD) by a proportional coefficient K. The value of K is not a fixed value but a value that varies depending on the thickness and heating properties, such as the specific heat, of each steel strip, the arrangement position of the rapid heating device, the furnace temperature of the annealing furnace, the heated length, and so on. Table 1 shows the value of K used in the present example.

In the cases (Test Nos. 1 to 6) in which the rapid heating temperature was predicted using the annealing process model according to the example of the present invention, the variation in the steel strip temperature on the exit side of the soaking zone was reduced.

In contrast, in the comparative examples (Test Nos. 7 and 12) of the conventional technology where a rapid heating device was not used, the variations in the steel strip temperature on the exit side of the heating zone and on the exit side of the soaking zone were large due to the influence of the variations in the thickness and the threading speed of the steel strip. Meanwhile, even when a rapid heating device was used (Test Nos. 8 to 11 and 13), the variation in the steel strip temperature on the exit side of the soaking zone was large under a given condition that the heating temperature of the rapid heating device was set constant without the influence of LSD taken into account.

When the temperature on the exit side of the rapid heating device was changed in accordance with the variation in LSDt (Test Nos. 14 to 25), the variation in the steel strip temperature on the exit side of the soaking zone was significantly reduced even when there was an influence of the variation in the thickness or line speed for the steel strip. However, adjustments such as determining the proportional coefficient K and setting a reference heating temperature were required.

Although the above example was conducted under particular conditions, such as threading speed, thickness and width of each steel strip, and annealing temperature, the present invention is also effective and applicable to other conditions.

[Table 1]

| Test No. | Use of rapid heating device | Heating temperature (°C) for steel strip on exit side of rapid heating device | Machine learning model | Coefficient K | Sheet thickness (mm) | Threading speed 1 (m/min) | Threading speed 2 (m/min) | Threading speed 3 (m/min) | LSD1 (mm× (m/min)) | LSD2 (mm× (m/min)) | LSD3 (mm× (m/min)) | Exit side of soaking zone | | Remarks |
|---|---|---|---|---|---|---|---|---|---|---|---|---|---|---|
| | | | | | | | | | | | | Target temp. (°C) | Max difference (°C) | |
| 1 | Used | Controlled between 97 and 153 | Annealing process model | - | 1.6 | 50 | 50 | 50 | 80 | 80 | 80 | 1050 | 3 | Invention Example |
| 2 | Used | Controlled between 126 and 188 | Annealing process model | - | 2.0 | 50 | 50 | 50 | 100 | 100 | 100 | 1050 | 2 | Invention Example |
| 3 | Used | Controlled between 185 and 254 | Annealing process model | - | 2.6 | 40 | 40 | 40 | 104 | 104 | 104 | 1050 | 3 | Invention Example |
| 4 | Used | Controlled between 91 and 207 | Annealing process model | - | 1.6 | 50 | 55 | 50 | 80 | 88 | 80 | 1050 | 1 | Invention Example |
| 5 | Used | Controlled between 105 and 234 | Annealing process model | - | 2.0 | 50 | 55 | 50 | 100 | 110 | 100 | 1050 | 2 | Invention Example |
| 6 | Used | Controlled between 161 and 289 | Annealing process model | - | 2.6 | 40 | 44 | 40 | 104 | 114.4 | 104 | 1050 | 2 | Invention Example |
| 7 | Not used | 20 | Not used | - | 2.0 | 50 | 50 | 50 | 100 | 100 | 100 | 1050 | 33 | Comparative Example |
| 8 | Used | 100 | Not used | - | 2.0 | 50 | 50 | 50 | 100 | 100 | 100 | 1050 | 28 | Comparative Example |
| 9 | Used | 200 | Not used | - | 2.0 | 50 | 50 | 50 | 100 | 100 | 100 | 1050 | 29 | Comparative Example |
| 10 | Used | 300 | Not used | - | 2.0 | 50 | 50 | 50 | 100 | 100 | 100 | 1050 | 22 | Comparative Example |

| Test No. | Use of rapid heating device | Heating temperature (°C) for steel strip on exit side of rapid heating device | Machine learning model | Coefficient K | Sheet thickness (mm) | Threading speed 1 (m/min) | Threading speed 2 (m/min) | Threading speed 3 (m/min) | LSD1 (mm× (m/min)) | LSD2 (mm× (m/min)) | LSD3 (mm× (m/min)) | Exit side of soaking zone | | Remarks |
|---|---|---|---|---|---|---|---|---|---|---|---|---|---|---|
| | | | | | | | | | | | | Target temp. (°C) | Max difference (°C) | |
| 11 | Used | 400 | Not used | - | 2.0 | 50 | 50 | 50 | 100 | 100 | 100 | 1050 | 25 | Comparative Example |
| 12 | Not used | 20 | Not used | - | 2.0 | 50 | 55 | 50 | 100 | 110 | 100 | 1050 | 42 | Comparative Example |
| 13 | Used | 300 | Not used | - | 2.0 | 50 | 55 | 50 | 100 | 110 | 100 | 1050 | 36 | Comparative Example |
| 14 | Used | K*(LSDt-LSD)+250 | Not used | 8 | 1.6 | 50 | 50 | 50 | 80 | 80 | 80 | 1050 | 7 | Comparative Example |
| 15 | Used | K*(LSDt-LSD)+250 | Not used | 10 | 2.0 | 50 | 50 | 50 | 100 | 100 | 100 | 1050 | 10 | Comparative Example |
| 16 | Used | K*(LSDt-LSD)+250 | Not used | 13 | 2.6 | 40 | 40 | 40 | 104 | 104 | 104 | 1050 | 7 | Comparative Example |
| 17 | Used | K*(LSDt-LSD)+250 | Not used | 5 | 2.0 | 50 | 50 | 50 | 100 | 100 | 100 | 1050 | 13 | Comparative Example |
| 18 | Used | K*(LSDt-LSD)+100 | Not used | 10 | 2.0 | 50 | 50 | 50 | 100 | 100 | 100 | 1050 | 8 | Comparative Example |
| 19 | Used | K*(LSDt-LSD)+100 | Not used | 5 | 2.0 | 50 | 50 | 50 | 100 | 100 | 100 | 1050 | 12 | Comparative Example |
| 20 | Used | K*(LSDt-LSD)+250 | Not used | 8 | 1.6 | 50 | 55 | 50 | 80 | 88 | 80 | 1050 | 9 | Comparative Example |
| 21 | Used | K*(LSDt-LSD)+250 | Not used | 10 | 2.0 | 50 | 55 | 50 | 100 | 110 | 100 | 1050 | 6 | Comparative Example |
| 22 | Used | K*(LSDt-LSD)+250 | Not used | 13 | 2.6 | 40 | 44 | 40 | 104 | 114.4 | 104 | 1050 | 8 | Comparative Example |
| 23 | Used | K*(LSDt-LSD)+250 | Not used | 5 | 2.0 | 50 | 55 | 50 | 100 | 110 | 100 | 1050 | 11 | Comparative Example |

EP 4 527 952 A1

(continued)

| Test No. | Use of rapid heating device | Heating temperature (°C) for steel strip on exit side of rapid heating device | Machine learning model | Coefficient K | Sheet thickness (mm) | Threading speed 1 (m/min) | Threading speed 2 (m/min) | Threading speed 3 (m/min) | LSD1 (mm×(m/min)) | LSD2 (mm×(m/min)) | LSD3 (mm×(m/min)) | Exit side of soaking zone | | Remarks |
|---|---|---|---|---|---|---|---|---|---|---|---|---|---|---|
| | | | | | | | | | | | | Target temp. (°C) | Max difference (°C) | |
| 24 | Used | K*(LSDt-LSD)+100 | Not used | 10 | 2.0 | 50 | 55 | 50 | 100 | 110 | 100 | 1050 | 7 | Comparative Example |
| 25 | Used | K*(LSDt-LSD)+100 | Not used | 5 | 2.0 | 50 | 55 | 50 | 100 | 110 | 100 | 1050 | 10 | Comparative Example |

LSD = Preset sheet thickness×threading speed
LSDt= Measured sheet thickness×threading speed

[Example 2]

A steel slab containing 3.5 mass% Si for an electrical steel sheet was produced by a continuous casting method. The slab was then reheated to a temperature of 1200°C or higher and then hot-rolled to obtain a hot-rolled sheet having a thickness of 2 mm. The hot-rolled sheet was then annealed at about 1050°C for 30 seconds in the annealing line including the rapid heating device, heating zone, and soaking zone as shown in Fig. 1 and then pickled. An induction heating device was used as the rapid heating device. Table 2 shows the production conditions and the result of the evaluation of the magnetic properties of each steel sheet product.

An electrical-steel-sheet production model was used that had been obtained through machine learning with a neural network using result data of operation including the temperature distribution of a slab during slab heating, the temperature distribution of a steel strip in a rough-rolling step during hot rolling, and the magnetic properties of a steel strip subjected to final finishing annealing. The model was used to predict the annealing temperature for obtaining the target magnetic properties. The heating temperature of the rapid heating device was predicted so that the difference between the above predicted annealing temperature as a target value and the predicted value of the annealing temperature by the annealing process model is 8°C or less. Then, the hot-rolled steel strip was annealed by setting the predicted heating temperature as a production condition.

The steel strip was then cold-rolled to an intermediate thickness of 1.5 mm and divided into two in the longitudinal direction. One of them was subjected to intermediate annealing at 1100°C for 20 seconds, while the other was not subjected to intermediate annealing. Each steel strip was then subjected to a second cold rolling to form a cold-rolled sheet having a final thickness of 0.23 mm. The cold-rolled sheet was then subjected to decarburization annealing, which was combined with primary recrystallization annealing, at 840°C for 100 seconds. An annealing separating agent composed mainly of MgO was applied to each surface of the steel sheets that had been subjected to the decarburization annealing, followed by drying. Then, the steel sheet was subjected to finishing annealing including secondary recrystallization annealing and purification treatment that was performed at 1200°C for 10 hours. The atmospheric gas for the finishing annealing was set to $H_2$ when the steel sheet was held at 1200°C during the purification treatment, and was set to $N_2$ when the temperature was increased (such as in the secondary recrystallization annealing) and when the temperature was lowered.

Table 2 shows, for each of the obtained steel strips after finishing annealing, the difference ($\Delta$B8) between the maximum value and the minimum value of the magnetic properties B8 within the same steel strip that is evaluated as the variations in the magnetic properties.

When annealing was performed with the rapid heating device using the electrical-steel-sheet production model and the annealing process model (Test Nos. 28 and 29), the temperature variation within the same steel strip was found to be smaller than that when the machine learning models were not used (Test Nos. 26 and 27). Thus, it was possible to obtain a grain-oriented electrical steel sheet with a high-quality material with reduced variations in magnetic properties. Meanwhile, when annealing was performed with the electrical-steel-sheet production model and the annealing process model under the condition that the rapid heating device was not used (Test Nos. 32 and 33), it was difficult to control the steel strip temperature with high accuracy simply by controlling the furnace temperature. Therefore, the obtained effect was insufficient, but it was possible to reduce the variations in magnetic properties more than when annealing was performed under the conventional conditions (Test Nos. 30 and 31).

Although the above example was conducted under given conditions of Si content, sheet thickness, and temperature history for comparative verification purposes, the present invention is also applicable to electrical steel sheets and the like that are produced under different conditions of Si content, sheet thickness, and temperature history.

[Table 2]

| Test No. | Use of rapid heating device | Training data: temperature distribution of slab or temperature distribution of steel strip | Machine learning model | Intermediate annealing after cold rolling | Difference $\Delta$B8 [T] in magnetic properties within same steel strip | Remarks |
|---|---|---|---|---|---|---|
| 26 | Used | Not used | Not used | Not performed | 0.030 | Comparative Example |
| 27 | Used | Not used | Not used | Performed | 0.026 | Comparative Example |

(continued)

| Test No. | Use of rapid heating device | Training data: temperature distribution of slab or temperature distribution of steel strip | Machine learning model | Intermediate annealing after cold rolling | Difference ΔB8 [T] in magnetic properties within same steel strip | Remarks |
|---|---|---|---|---|---|---|
| 28 | Used | Used | Electrical steel sheet production model Annealing process model | Not performed | 0.003 | Invention Example |
| 29 | Used | Used | Electrical steel sheet production model Annealing process model | Performed | 0.002 | Invention Example |
| 30 | Not used | Not used | Not used | Not performed | 0.053 | Conventional Example |
| 31 | Not used | Not used | Not used | Performed | 0.042 | Conventional Example |
| 32 | Not used | Used | Electrical steel sheet production model Annealing process model | Not performed | 0.033 | Comparative Example |
| 33 | Not used | Used | Electrical steel sheet production model Annealing process model | Performed | 0.035 | Comparative Example |

Industrial Applicability

The technology of the present invention is directed to minimize the variation in the quality of a product sheet by suppressing the variation in the steel strip temperature on the exit side of the heating zone, and thus controlling the annealing temperature (soaking temperature) for the steel strip to a predetermined temperature with high accuracy. The technology of the present invention is applicable to not only a hot-rolled steel strip for an electrical steel sheet but also other metal strips for which the annealing temperature needs to be controlled.

Reference Signs List

S:    Steel strip
1:    Annealing furnace
2:    Rapid heating device
3:    Heating zone
4:    Soaking zone
5:    Thickness meter

**Claims**

1.   An annealing method for a hot-rolled steel strip, comprising

annealing a hot-rolled steel strip in an annealing line that includes a heating zone, a soaking zone, and a cooling zone in this order from an upstream side and is provided with a rapid heating device either on an entry side of the heating zone or in the heating zone; and

predicting a heating temperature of the rapid heating device, or both the heating temperature of the rapid heating device and heating conditions for the heating or soaking zone by using an annealing process model prepared in advance through machine learning using operation parameters, including steel strip information, selected from each zone and using past records of steel strip temperatures in each zone, so as to reduce the difference between a predicted and a target value of an annealing temperature for the hot-rolled steel strip.

2. A method for producing an electrical steel sheet, comprising

heating a slab containing 1.6 to 5.0 mass% Si for an electrical steel sheet in a heating furnace,

hot-rolling the slab to obtain a hot-rolled steel strip,

annealing the hot-rolled steel strip in an annealing line that includes a heating zone, a soaking zone, and a cooling zone in this order from an upstream side and that is provided with a rapid heating device either on an entry side of the heating zone or in the heating zone and also with a thickness meter at an upstream side of the rapid heating device,

pickling the annealed hot-rolled steel strip,

performing a cold rolling process once or two or more cold rolling processes with an intermediate annealing process between each cold rolling process to obtain a cold-rolled steel strip,

subjecting the cold-rolled steel strip to a decarburization annealing,

applying an annealing separating agent to the cold-rolled steel strip followed by drying, and

performing a finishing annealing,

**characterized in that**

the hot-rolled steel strip is annealed so as to reduce a difference between the target value and the predicted value of the annealing temperature predicted by the annealing process model used in the annealing method for the hot-rolled steel strip according to claim 1,

wherein the target value is an annealing temperature for the hot-rolled steel strip predicted so as to reduce variations in magnetic properties predicted by, using an electrical-steel-sheet production model prepared in advance through machine learning by using, as training data, a temperature distribution of the slab after slab heating, a temperature distribution of the steel strip in rough-rolling during hot rolling, past records of annealing temperatures for hot-rolled steel strips, and magnetic properties of electrical steel sheets.

[Fig. 1]

[Fig. 2]

[Fig. 3]

```
┌─────────────────────────────┐
│           START             │
└─────────────────────────────┘
              │
              ▼
┌─────────────────────────────────────────────┐
│   Generation of Annealing Process Model      │
│   Training Data                              │       S11
│     -Operation Parameters                    │
│     -Past Records of Steel Strip Temperature │
└─────────────────────────────────────────────┘
              │
              ▼
┌─────────────────────────────────────────────┐
│              Prediction                      │
│   Predict, with Annealing Process Model,     │
│   Heating Temperature of Rapid Heating       │
│   Device or Both Heating Temperature of      │       S12
│   Rapid Heating Device and Heating Condition │
│   for Heating Zone or Soaking Zone to        │
│   Achieve Target Annealing Temperature for   │
│   Steel Strip                                │
└─────────────────────────────────────────────┘
              │
              ▼
┌─────────────────────────────────────────────┐
│      Annealing of Hot-Rolled  Strip          │       S13
│   Anneal by Setting Predicted Heating        │
│   Temperature of Rapid Heating Device        │
└─────────────────────────────────────────────┘
              │
              ▼
┌─────────────────────────────┐
│            END              │
└─────────────────────────────┘
```

**Generation of Annealing Process Model**

Training Data

-Operation Parameters

-Past Records of Steel Strip Temperature

S11

**Prediction**

Predict, with Annealing Process Model, Heating Temperature of Rapid Heating Device or Both Heating Temperature of Rapid Heating Device and Heating Condition for Heating Zone or Soaking Zone to Achieve Target Annealing Temperature for Steel Strip

S12

**Annealing of Hot-Rolled  Strip**

Anneal by Setting Predicted Heating Temperature of Rapid Heating Device

S13

[Fig. 4]

```
                          ┌─────────────────┐
                          │      START      │
                          └─────────────────┘
                                   │
                                   ▼
┌──────────────────────────────────────────────────────────────┐
│      Generation of Electrical Steel Sheet Production Model     │
│  Training Data                                                 │
│      -Temperature Distribution of Slab Heating in Hot Rollling │
│      -Temperature Distribution of Steel Strip in Rough Rollling│   ~S21
│      -Past Records of Annealing Temperature and Magnetic       │
│       Properties of Steel Strip                                │
└──────────────────────────────────────────────────────────────┘
                                   │
                                   ▼
┌──────────────────────────────────────────────────────────────┐
│                          Pediction                             │
│  Predict Annealing Temperature with Electrical Steel Sheet     │
│  Production Model to Obtain Target Magnetic Properties of Steel │   ~S22
│  Strip and Predict Annealing Condition with Annealing Process  │
│  Model by Setting Predicted Annealing Temperature as Target    │
└──────────────────────────────────────────────────────────────┘
                                   │
                                   ▼
┌──────────────────────────────────────────────────────────────┐
│               Production of Electrical Steel Sheet             │
│  Perform Annealing Based on Predicted Annealing Condition and  │
│  then Perform Production Step of Electrical Steel Sheet         │   ~S23
│  Including Cold Rolling and Annealing                          │
└──────────────────────────────────────────────────────────────┘
                                   │
                                   ▼
                          ┌─────────────────┐
                          │       END       │
                          └─────────────────┘
```

## INTERNATIONAL SEARCH REPORT

| International application No. |
|---|
| **PCT/JP2023/023093** |

### A. CLASSIFICATION OF SUBJECT MATTER

***C21D 9/46***(2006.01)i; ***C21D 9/56***(2006.01)i; ***C21D 11/00***(2006.01)i; ***C22C 38/00***(2006.01)i; ***C22C 38/02***(2006.01)i
FI:   C21D9/46 501A; C22C38/00 303U; C22C38/02; C21D9/56 101A; C21D11/00 102

According to International Patent Classification (IPC) or to both national classification and IPC

### B. FIELDS SEARCHED

Minimum documentation searched (classification system followed by classification symbols)

C21D1/00-C21D11/00; C22C38/00-C22C38/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2018-66040 A (JFE STEEL CORP) 26 April 2018 (2018-04-26)<br>entire text, all drawings | 1-2 |
| A | JP 2014-148731 A (KOBE STEEL LTD) 21 August 2014 (2014-08-21)<br>entire text, all drawings | 1-2 |
| A | JP 2022-24340 A (JFE STEEL CORP) 09 February 2022 (2022-02-09)<br>entire text, all drawings | 1-2 |
| A | CN 201265027 Y (ANGANG STEEL COMPANY LIMITED) 01 July 2009 (2009-07-01)<br>entire text, all drawings | 1-2 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 September 2023** | **12 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/023093**

| Patent document cited in search report | | | Publication date (day/month/year) | Patent family member(s) | | | Publication date (day/month/year) |
|---|---|---|---|---|---|---|---|
| JP | 2018-66040 | A | 26 April 2018 | US | 2019/0249270 | A1 | |
| | | | | entire text, all drawings | | | |
| | | | | US | 2022/0033928 | A1 | |
| | | | | WO | 2018/074295 | A1 | |
| | | | | EP | 3530762 | A1 | |
| | | | | KR | 10-2019-0044660 | A | |
| | | | | CN | 109844143 | A | |
| | | | | RU | 2724265 | C1 | |
| JP | 2014-148731 | A | 21 August 2014 | (Family: none) | | | |
| JP | 2022-24340 | A | 09 February 2022 | (Family: none) | | | |
| CN | 201265027 | Y | 01 July 2009 | (Family: none) | | | |

Form PCT/ISA/210 (patent family annex) (January 2015)

**REFERENCES CITED IN THE DESCRIPTION**

**Patent documents cited in the description**

- JP 2016000856 A
- JP 2018066040 A